# EUROPEAN PATENT APPLICATION

(11) **EP 4 679 934 A1**
(43) Date of publication of application: **14.01.2026**
(21) Application number: 23927218.0
(22) Date of filing: 19.12.2023
(51) Int. Cl.: H04W 76/50

(54) **SESSION ESTABLISHMENT METHOD, COMMUNICATION DEVICE AND STORAGE MEDIUM**

(30) Priority: 15.03.2023 CN 202310287056
(71) Applicant: ZTE Corporation, Shenzhen, Guangdong Province 518057 (CN)
(72) Inventor: GAO, Lei, Shenzhen, Guangdong 518057 (CN); FAN, Wanpeng, Shenzhen, Guangdong 518057 (CN); CHEN, Hao, Shenzhen, Guangdong 518057 (CN); HU, Faming, Shenzhen, Guangdong 518057 (CN)
(74) Representative: Ziebig Hengelhaupt Intellectual Property Attorneys Patentanwaltskanzlei PartGmbB
(86) International application number: PCT/CN2023/139817
(87) International publication number: WO 2024/187878

(57) **Abstract**

The present application belongs to the field of communications. Provided are a session establishment method, a device and a storage medium. The session establishment method is applied to a mobility management function network element. The method comprises: in response to an emergency session request sent by a target terminal, sending a terminal location request to a location management network element; acquiring terminal location information determined, according to the terminal location request, by the location management network element; sending the emergency session request and the terminal location information to a gateway mobile locating network element, such that the gateway mobile locating network element determines a target alarm receiving center according to the emergency session request and the terminal location information, and sends the terminal location information to the target alarm receiving center, the distance between the target terminal and the target alarm receiving center being smaller than or equal to a preset distance threshold value; and establishing an emergency session between the target alarm receiving center and the target terminal.

## Description

### CROSS REFERENCE TO RELATED APPLICATIONS

This application is based upon and claims priority to Chinese Patent Application No. 202310287056.9 filed on March 15, 2023, entitled "SESSION ESTABLISHMENT METHOD, COMMUNICATION DEVICE AND STORAGE MEDIUM", the entire contents of which are incorporated herein by reference.

### TECHNICAL FIELD

The present application relates to the technical field of communications, and in particular to a session establishment method, a device and a storage medium.

### BACKGROUD

3GPP has a standard definition of emergency positioning, i.e., the network induced location request (NI-LR) . NI-LR refers to a location request for a mobile terminal from the Public Land Mobile Network (PLMN) that is providing services to the mobile terminal, and is mainly used for positioning an initiator of an emergency call. However, in the current 5GC NI-LR process, when a positioning platform receives location information from an access and mobility management function (AMF), there is no similar field that can be used to match a receiver of the emergency call, such as an alarm receiving center. Therefore, a receiver, which is located near the initiator, of the emergency call cannot be determined accurately, and it is required to transfer and relay location information manually. Further, the efficiency in determining a receiver of an emergency call is relatively low, and the receiver of the emergency call cannot obtain the location information of the initiator timely.

### SUMMARY

The present application provides a session establishment method, a device and a storage medium.

In a first aspect, the present application provides a session establishment method, the method includes: sending, in response to an emergency session request from a target terminal, a terminal location request to a location management function; acquiring terminal location information which is determined by the location management function according to the terminal location request; sending the emergency session request and the terminal location information to the gateway mobile location center, such that the gateway mobile location center determines a target alarm receiving center according to the emergency session request and the terminal location information, and sends the terminal location information to the target alarm receiving center, wherein the distance between the target terminal and the target alarm receiving center being smaller than or equal to a preset distance threshold value; and establishing an emergency session between the target alarm receiving center and the target terminal.

In a second aspect, the present application further provides a communication device, wherein the communication device includes a processor, a memory, a computer program stored on the memory and executable by the processor, and a data bus for enabling connection communication between the processor and the memory, wherein the computer program, when executed by the processor, implements steps of the session establishment method according to any one of aspects of the specification of the present application.

In a third aspect, the present application further provides a storage medium for computer-readable storage, wherein the storage medium stores one or more programs thereon, and the one or more programs can be executed by one or more processors, so as to implement the steps of the session establishment method according to any one of aspects of the specification of the present application.

### BRIEF DESCRIPTION OF THE DRAWINGS

In order to illustrate the technical solutions in the embodiments of the present application more clearly, the drawings required for use in the description of the embodiments will be briefly introduced below. Apparently, the drawings described below are some embodiments of the present application, and other drawings can be also obtained by those skilled in the art based on these drawings without creative labor.
FIG. 1 is a schematic flow chart of a session establishment method provided by embodiments of the present application.
FIG. 2 is a schematic diagram of session establishment provided by embodiments of the present application.
FIG. 3 is a schematic flow chart of a session establishment method provided by embodiments of the present application.
FIG. 4 is a schematic diagram of a communication device provided by embodiments of the present application.

### DETAILED DESCRIPTION

Technical solutions in embodiments of the application will be described clearly and thoroughly below with reference to the accompanying drawings in embodiments of the application. Apparently, the embodiments described are part of the embodiments of the application rather than all of the embodiments. All other embodiments obtained by those skilled in the art without creative work based on embodiments in the present application shall fall within the scope of the present application.

The flowcharts shown in the accompanying drawings are only examples and do not necessarily include all the contents and operations/steps, nor do they have to be performed in the order described. For example, some operations/steps may also be decomposed, combined or partially merged, thus the order actually performed may change according to actual conditions.

It should be understood that the terms used in the description of the present application are only for the purpose of describing specific embodiments and are not intended to limit the present application. As used in the specification of the present application and the appended claims, unless the context clearly indicates otherwise, the singular forms "a", "an" and "the" are intended to include plural forms.

The present application provides a session establishment method, a device and a storage medium. The session establishment method may be applied to an Access and Mobility Management Function (AMF), wherein the AMF may be disposed in a server or a communication device, and the AMF is in communication connection with a Location Management Function (LMF) and a Gateway Mobile Location Centre (GMLC).

Some embodiments of the present application will be described in detail below in conjunction with the accompanying drawings. The following embodiments and features in the embodiments may be combined with each other without conflict.

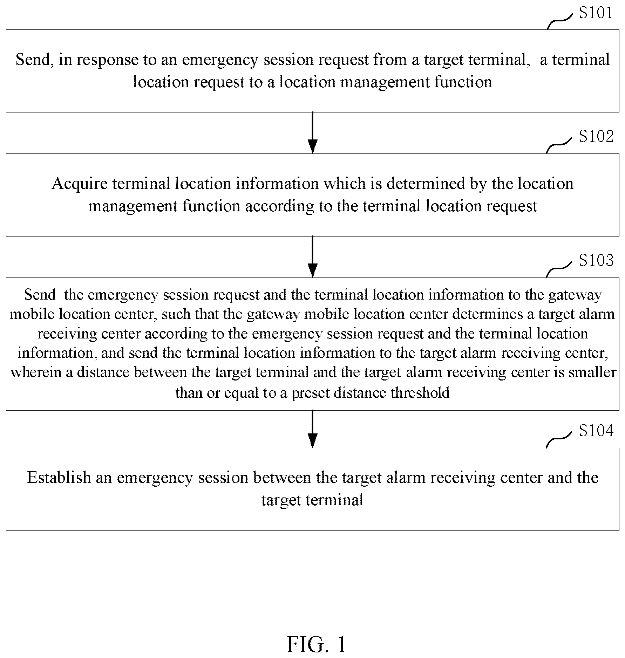

Referring to FIG. 1, which is a schematic flow chart of a session establishment method provided by an embodiment of the present application.

As shown in FIG. 1, the session establishment method may include steps S101 to S104.

At S101, in response to an emergency session request from a target terminal, a terminal location request is sent to a location management function.

By way of example, in response to the emergency session request sent by the target terminal, the access and mobility management function sends the terminal location request to the location management function, so as to determine a current location of the target terminal.

In the implementation process, when a user uses the target terminal to dial an emergency number, such as 110 or 119, the target terminal registers with 5GC for an emergency service or requests the establishment of an emergency PDU session, so as to send an emergency session request to the access and mobility management function.

In one embodiment, sending the terminal location request to a location management function includes that a network address of the location management function is determined based on preset configuration information; and communication connection with the location management function is established based on the network address of the location management function, so that the terminal location request is sent to the location management function.

By way of example, the configuration information may be stored in the access and mobility management function, the configuration information is, for example, a mapping relationship between access and mobility management functions and location management functions, so that the location management function is determined based on the mapping relationship.

In another embodiment, the access and mobility management function is also in connection with a network repository function (NRF), such that the access and mobility management function determines the location management function by means of the network repository function.

By way of example, the access and mobility management function queries the network repository function for a network address of the location management function, so as to send a terminal location request to the location management function based on the network address of the location management function.

At S102, terminal location information which is determined by the location management function according to the terminal location request is acquired.

By way of example, the location management function determines the terminal location information of the target terminal according to the terminal location request sent by the access and mobility management function, and returns the terminal location information to the access and mobility management function, such that the access and mobility management function can determine a target alarm receiving center based on the terminal location information.

In some cases, the access and mobility management function requests the terminal location information from the location management function by invoking the Nlmf_Location_DetermineLocation service operation of the location management function.

In response to the Nlmf_Location_DetermineLocation service operation, the location management function performs the positioning process, estimates the location of the target terminal, and returns Nlmf_Location_DetermineLocation Response to the access and mobility management function, such that the access and mobility management function acquires the terminal location information.

At S103, the emergency session request and the terminal location information are sent to the gateway mobile location center, such that the gateway mobile location center determines a target alarm receiving center according to the emergency session request and the terminal location information, and the terminal location information is sent to the target alarm receiving center, wherein the distance between the target terminal and the target alarm receiving center is smaller than or equal to a preset distance threshold.

By way of example, after acquiring the terminal location information, the access and mobility management function sends the emergency session request and the terminal location information to the gateway mobile location center.

By way of example, the preset distance threshold is determined according to the distance between a plurality of alarm receiving centers and the target terminal. For example, the distance between each alarm receiving center and the target terminal is determined, the plurality of alarm receiving centers are sorted by the distances between the centers and the target terminal in an ascending order, then the distance corresponding to the alarm receiving center ranked first in the sorting result is determined as the preset distance threshold, or the distance corresponding to the alarm receiving center ranked second in the sorting result is determined as the preset distance threshold, or the distance corresponding to the alarm receiving center ranked first in the sorting result is determined as the first distance threshold, and the distance corresponding to the alarm receiving center ranked second in the sorting result is determined as the second distance threshold; or a preset distance value range is determined, where the minimum value of the preset distance value range is the first distance threshold, and the maximum value of the preset distance value range is the second distance threshold; or any value in the preset distance value range is determined as the preset distance threshold.

In some embodiments, the access and mobility management function is in connection with the network repository function; sending the emergency session request and the terminal location information to the gateway mobile location center includes that query information for querying a network address of the gateway mobile location center is sent to the network repository function; a network address, which is determined by the network repository function according to the query information, of the gateway mobile location center is acquired; and communication connection with the gateway mobile location center is established based on the network address of the gateway mobile location center, and the emergency session request and the terminal location information are sent to the gateway mobile location center.

By way of example, the access and mobility management function may query the gateway mobile location center by means of the network repository function. In some cases, the access and mobility management function sends to the network repository function query information for querying a network address of the gateway mobile location center, such that the network repository function determines the network address of the gateway mobile location center based on the query information and returns the network address to the access and mobility management function. Thus, the access and mobility management function establishes a communication connection with the gateway mobile location center based on the network address of the gateway mobile location center, and sends the emergency session request and terminal location information to the gateway mobile location center.

In other embodiments, the access and mobility management function may determine the gateway mobile location center based on local configuration information.

By way of example, after determining the gateway mobile location center, the access and mobility management function sends the emergency session request and terminal location information to the gateway mobile location center, such that the gateway mobile location center determines a target alarm receiving center according to the emergency session request and the terminal location information, and sends the terminal location information to the target alarm receiving center. It should be understood that the distance between the target terminal and the target alarm receiving center is smaller than or equal to a preset distance threshold, so as to determine a target alarm receiving center located near the target terminal.

In some embodiments, the terminal location information includes a degree of location accuracy and a valid time range of the location information, and sending the emergency session request and the terminal location information to the gateway mobile location center includes: upon the condition that the degree of location accuracy is greater than or equal to a preset threshold and a current time is within the valid time range, the emergency session request and the terminal location information are sent to the gateway mobile location center.

It can be understood that the terminal location information determined by the location management function further includes the degree of location accuracy and the valid time range of the location information, such that upon the condition that the degree of location accuracy is greater than or equal to a preset threshold and the current time is within the valid time range, the emergency session request and the terminal location information are sent to the gateway mobile location center, and thus, the gateway mobile location center determines the target alarm receiving center, thereby improving the accuracy of determining the target alarm receiving center.

In the implementation process, the access and mobility management function invokes the Namf_Location_EventNotify service operation in the determined gateway mobile location center and reports the called emergency number based on the emergency session request, so as to notify the gateway mobile location center of the initiation of an emergency session.

In some embodiments, sending the emergency session request and the terminal location information to the gateway mobile location center, such that the gateway mobile location center determines a target alarm receiving center according to the emergency session request and the terminal location information includes: the emergency session request and the terminal location information are sent to the gateway mobile location center, such that the gateway mobile location center determines a target call number, and determines a target alarm receiving center according to the target call number and the terminal location information.

It can be understood that the target call number is used to represent the emergency number called by the target terminal, for example 110, 119 and other numbers.

By way of example, the target call number may determine the type of an alarm receiving center, for example, 119 denotes calling the fire department, and the terminal location information of the target terminal may be used to determine an alarm receiving center located near the target terminal, thereby accessing the nearest alarm receiving center and improving the response efficiency.

In some embodiments, determining the target alarm receiving center according to the target call number and the terminal location information by the gateway mobile location center includes: the gateway mobile location center determines a plurality of candidate alarm receiving centers according to the terminal location information and location information of a plurality of alarm receiving centers stored in the gateway mobile location center; the gateway mobile location determines the target alarm receiving center from the plurality of candidate alarm receiving centers based on the target call number and number information corresponding to each of the candidate alarm receiving centers; and the gateway mobile location acquires network address information of the target alarm receiving center, and sends the terminal location information to the target alarm receiving center based on the network address information.

In some cases, when receiving an EventNotify message with the location event being "EMERGENCY_CALL_ORIGINATION", the gateway mobile location center parses the target call number and NRCellGlobal Identifier (NCGI) carried therein, queries for the area to which the target terminal currently belongs by means of the NCGI, and queries for the URL of the target alarm receiving center to which the target terminal belongs based on the target call number, so as to determine the target alarm receiving center.

By way of example, the target call number is acquired by parsing the emergency session request, and the NCGI is determined by the terminal location information.

It can be understood that after querying the area to which the target terminal currently belongs by the NCGI, there may be different types of alarm receiving centers in the area to which the target terminal currently belongs, such as fire stations, police stations, hospitals, etc., therefore, the target alarm receiving center needs to be determined by the target call number.

In some cases, in the area to which the target terminal currently belongs, the distance between each alarm receiving center in each type and the target terminal is determined; one alarm receiving center in each type is screened out based on the distance between each alarm receiving center and the target terminal, where the alarm receiving center is closest to the target terminal among all alarm receiving centers in the corresponding type; and the type of the alarm receiving center is determined based on the target call number, so as to determine the target alarm receiving center.

By way of example, after the target alarm receiving center is determined, the terminal location information used to indicate the current location of the target terminal is sent to the target alarm receiving center. In some cases, the gateway mobile location center is further configured to forward the terminal location information of the target terminal to an external emergency service client. It can be understood that the external emergency service client is configured to represent a communication terminal corresponding to the target alarm receiving center.

According to the above-mentioned embodiments, the following scenario may be realized. A user dials the emergency number 110 in Yuhuatai District, Nanjing by means of a target terminal, the steps provided in the above-mentioned embodiments are thus triggered. A gateway mobile location center receives an EventNotify message sent by the access and mobility management function, the target number 110 is parsed from the EventNotify message, and the area where the target terminal is currently located is determined to be Yuhuatai District by means of query based on the NCGI, then the gateway mobile location center pushes the emergency location information to the 110 alarm receiving center in Yuhuatai District, so that the alarm receiving center near the target terminal can be positioned, and a current location of the target terminal is pushed to the target alarm receiving center.

In some embodiments, prior to that the emergency session request sent by the target terminal is acquired, the method further includes: number information, location information and network address information corresponding to each of a plurality of alarm receiving centers are acquired; and mapping relationships between the number information, location information and network address information of each alarm receiving centers are established; and the mapping relationships are stored in the gateway mobile location center, such that the gateway mobile location center can determine the target alarm receiving center according to the emergency session request, the terminal location information and the mapping relationships.

By way of example, the access and mobility management function may establish mapping relationships between the number information, location information and network address information of individual alarm receiving centers by means of the gateway mobile location center, such that the gateway mobile location center can determine a plurality of candidate alarm receiving centers based on the terminal location information of the target terminal and the pre-stored location information, and determine the target alarm receiving center from the plurality of candidate alarm receiving centers based on the number information in the mapping relationship between the target call number in the acquired emergency session request and the candidate alarm receiving center, so that the alarm receiving center located near the target terminal can be determined.

The gateway mobile location center parses the EventNotify message to determine the target call number that is called by the target terminal, such that the network side can report the call number when emergency positioning is triggered, and the current location of the target terminal can be sent to the target alarm receiving center that is closer to the target terminal.

At S104, an emergency session between the target alarm receiving center and the target terminal is established.

By way of example, after the access and mobility management function notifies the gateway mobile location center of initiation of an emergency session, the emergency service session and the emergency PDU session are released, and the access and mobility management function invokes the Namf_Location_EventNotify service operation of the gateway mobile location center, such that the gateway mobile location center releases all resources associated with the emergency session, and the target terminal establishes the emergency session with the target alarm receiving center.

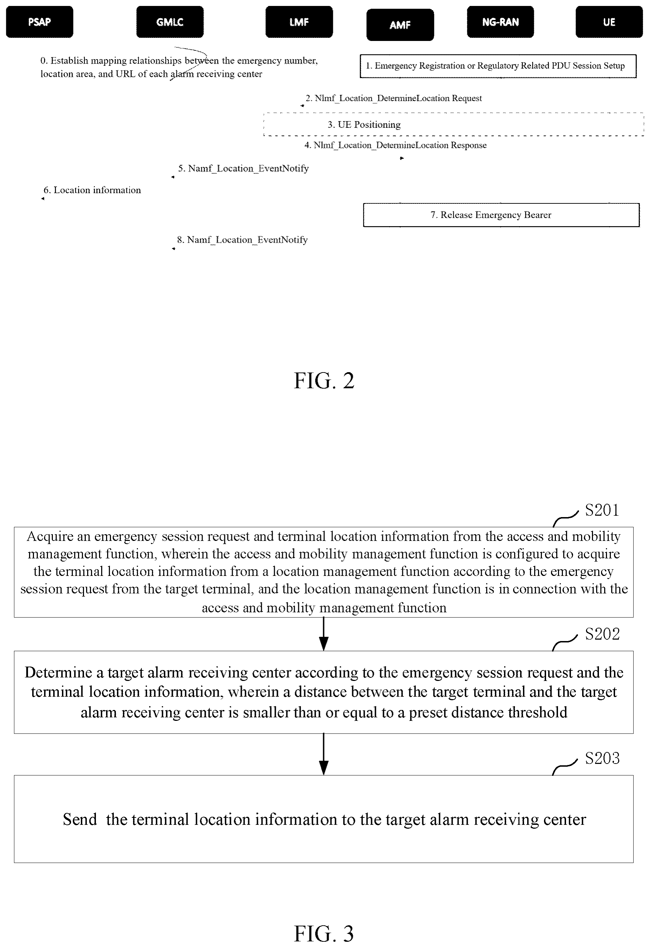

Please refer to FIG. 2 in conjunction with various embodiments described above, where FIG. 2 is a schematic diagram of session establishment provided by an embodiment of the present application.

As shown in FIG. 2, a gateway mobile location center can establish mapping relationships between the emergency number, location area, and URL of each alarm receiving center, such that the target alarm receiving center may be determined based on the target call number, terminal location information, and the URL of the alarm receiving center. When a target terminal UE initiates an emergency session request, the session establishment process is triggered by 5G radio access network (NG-RAN), and an AMF receives the emergency session request sent by the target terminal (Emergency Registration or Regulatory Related PDU Session Setup as shown in FIG. 2).

In response to the emergency session request, the AMF sends a terminal location request (such as Nlmf Location DetermineLocation Request in FIG. 2) to a location management function (LMF), such that the LMF determines the current location of the target terminal and returns the terminal location information (such as Nlmf_Location_DetermineLocation Response in FIG. 2) to the AMF.

After receiving the terminal location information, the AMF invokes the Namf_Location_EventNotify service operation of the gateway mobile location center(GMLC), such that theGMLC can determine the target alarm receiving center and send the current location information of the target terminal (such as the Location information in FIG. 2) to a receiving system PSAP corresponding to the target alarm receiving center, and it can be understood that the receiving system PSAP includes a communication terminal.

After the GMLC sends the current location information of the target terminal, the emergency service session and the emergency PDU session (Release Emergency Bearer as shown in FIG. 2) are released, and the AMF invokes the Namf_Location_EventNotify service operation of the GMLC, so as to notify the GMLC of release of the emergency session, such that the GMLC releases all resources associated with the emergency session, thereby completing the emergency session establishment process.

The session establishment method provided in the above-mentioned embodiments is applied to the AMF, the AMF sends a terminal location request to the LMF when receiving the emergency session request from the target terminal; acquires terminal location information which is determined by the LMF according to the terminal location request; sends the emergency session request and the terminal location information to the GMLC, such that the GMLC determines a target alarm receiving center according to the emergency session request and the terminal location information, where the distance between the target terminal and the target alarm receiving center is smaller than or equal to a preset distance threshold value; and establishes a session, so as to implement the emergency session between the target alarm receiving center and the target terminal. Thus, the alarm receiving center closest to the target terminal can be determined, the efficiency and accuracy of determining the alarm receiving center closest to the target terminal are improved, and at the same time the alarm receiving center can know the current location of the target terminal, thereby improving the efficiency of alarm receiving of the alarm receiving center.

Referring to FIG. 3, which is a flow chart of steps of a session establishment method provided by an embodiment of the present application. The session establishment method is applied to a gateway mobile location center.

As shown in FIG. 3, the method includes steps S201 - S203.

At S201, an emergency session request and terminal location information from an access and mobility management function are acquired, wherein the access and mobility management function is configured to acquire terminal location information from a according to the emergency session request from the target terminal, the location management function is in connection with the access and mobility management function.

By way of example, the gateway mobile location center is in communication with the access and mobility management function, so as to acquire the sent emergency session request and terminal location information. Please referred to the process provided in the above embodiments for specific working process of the gateway mobile location center and the access and mobility management function, which will not be described here.

At S202, a target alarm receiving center is determined according to the emergency session request and the terminal location information, wherein the distance between the target terminal and the target alarm receiving center is smaller than or equal to a preset distance threshold.

Please referred to the above-mentioned embodiments for specific implementation process of step S202, which will not be described here.

At S203, the terminal location information is sent to the target alarm receiving center.

By way of example, the gateway mobile location center may send the terminal location information including the current location of the target terminal to the target alarm receiving center, such that the target alarm receiving center determines the current location of the target terminal; the gateway mobile location center may also send the requested emergency session information to the access and mobility management function, so as to release the resources associated with this emergency session, such that the access and mobility management function can complete the session establishment process. Please refer to the method provided in the above-mentioned embodiments for specific implementations, which will not be repeated here.

The session establishment method provided in the above-mentioned embodiments is applied to a gateway mobile location center, the emergency session request and terminal location information from the access and mobility management function is acquired by the gateway mobile location center; a target alarm receiving center is determined according to the emergency session request and the terminal location information, wherein the distance between the target terminal and the target alarm receiving center is smaller than or equal to a preset distance threshold; and the terminal information is sent to the target alarm receiving center, so as to determine the alarm receiving center that is closest to the target terminal, which improves the efficiency and accuracy of determining the alarm receiving center closest to the target terminal, as well as enables the alarm receiving center to know the current location of the target terminal, such that the alarm receiving center can improve the efficiency of acquiring the location of the target terminal.

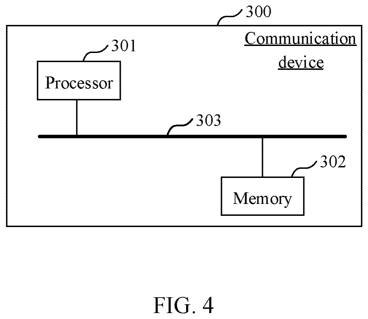

Referring to FIG. 4, which is a schematic structural diagram of a communication device provided by an embodiment of the present application.

As shown in FIG. 4, the communication device 300 includes a processor 301 and a memory 302, the processor 301 and the memory 302 are connected via a bus 303, the bus is, for example, an I2C (Inter-integrated Circuit) bus.

In some cases, the processor 301 is used to provide computing and control capabilities, so as to support operation of the entire communication device. The processor 301 may be a central processing unit (CPU), the processor 301 may also be other general-purpose processor, a digital signal processor (DSP), an application-specific integrated circuit (ASIC), a field-programmable gate array (FPGA) or other programmable logic devices, discrete gates or transistor logic devices, discrete hardware components. A general-purpose processor may be a microprocessor or the processor may also be any conventional processor, etc.

In some cases, the memory 302 may be a Flash chip, a read-only memory (ROM), a disk, an optical disk, a USB disk or a mobile hard disk, etc.

Those skilled in the art can understand that, the structure as shown in FIG. 4 is merely a block diagram of a part of structure related to the embodiments of the present application, and does not constitute a limitation on the communication device to which the embodiments of the present application are applied, and the specific server may include more or fewer components than those illustrated, or in combination with certain components, or have a different arrangement of components.

The processor is configured to run a computer program stored in the memory, and implement any one of the session establishment methods provided in the embodiments of the present application when executing the computer program.

In one embodiment, the processor is used to run a computer program stored in a memory, and implement the following steps when executing the computer program: sending, in response to an emergency session request from a target terminal, a terminal location request to a location management function; acquiring terminal location information which is determined by the location management function according to the terminal location request; sending the emergency session request and the terminal location information to the gateway mobile location center, such that the gateway mobile location center determines a target alarm receiving center according to the emergency session request and the terminal location information, and sends the terminal location information to the target alarm receiving center, wherein the distance between the target terminal and the target alarm receiving center being smaller than or equal to a preset distance threshold value; and establishing an emergency session between the target alarm receiving center and the target terminal.

In one embodiment, in the implementation of sending the emergency session request and the terminal location information to the gateway mobile location center, such that the gateway mobile location center determines a target alarm receiving center according to the emergency session request and the terminal location information, the processor is configured to implement: sending the emergency session request and the terminal location information to the gateway mobile location center, such that the gateway mobile location center determines a target call number according to the emergency session request, and determines a target alarm receiving center according to the target call number and the terminal location information.

In one embodiment, in the implementation that the gateway mobile location center determines the target alarm receiving center according to the target call number and the terminal location information, the processor is configured to implement: the gateway mobile location center determines a plurality of candidate alarm receiving centers according to the terminal location information and location information of a plurality of alarm receiving centers stored in the gateway mobile location center; determines the target alarm receiving center from the plurality of candidate alarm receiving centers based on the target call number and number information corresponding to each of the candidate alarm receiving centers; and acquires the network address information of the target alarm receiving center, and sends the terminal location information to the target alarm receiving center based on the network address information.

In one embodiment, when implementing the session establishment method, the processor is configured to implement: acquiring number information, location information and network address information corresponding to each of a plurality of alarm receiving centers; and establishing mapping relationships between the number information, location information and network address information of individual alarm receiving centers, and storing the mapping relationships in the gateway mobile location center, such that the gateway mobile location center determines the target alarm receiving center according to the emergency session request, the terminal location information and the mapping relationships.

In one embodiment, in the implementation of sending the emergency session request and the terminal location information to the gateway mobile location center, the processor is configured to implement: sending to the network repository function query information for querying a network address of the gateway mobile location center; acquiring a network address, which is determined by the network repository function according to the query information, of the gateway mobile location center; and establishing communication connection with the gateway mobile location center based on the network address of the gateway mobile location center, and sending the emergency session request and the terminal location information to the gateway mobile location center.

In one embodiment, in the implementation of sending the terminal location request to the location management function, the processor is configured to implement: determining a network address of the location management function based on preset configuration information; and establishing communication connection with the location management function based on the network address of the location management function, so as to send the terminal location request to the location management function.

In one embodiment, in the implementation of sending the emergency session request and the terminal location information to the gateway mobile location center, the processor is configured to implement: upon the condition that the degree of location accuracy is greater than or equal to a preset threshold and a current time is within the valid time range, sending the emergency session request and the terminal location information to the gateway mobile location center.

In another embodiment, the processor is used to run a computer program stored in a memory, and implement the following steps when executing the computer program: acquiring an emergency session request and terminal location information sent by the access and mobility management function, wherein the access and mobility management function is configured to acquire the terminal location information from a according to the emergency session request sent by the target terminal, and the location management function is in connection with the access and mobility management function; determining a target alarm receiving center according to the emergency session request and the terminal location information, where the distance between the target terminal and the target alarm receiving center is smaller than or equal to a preset distance threshold; and sending the terminal location information to the target alarm receiving center.

It should be noted that those skilled in the art can clearly understand that, for the convenience and brevity of description, the specific working process of the communication device described above can refer to the corresponding process in the above-mentioned embodiments of the session establishment methods, which will not be repeated here.

The present application further provides a storage medium for computer-readable storage, the storage medium stores one or more programs, and the one or more programs can be executed by one or more processors, so as to implement the steps of the session establishment method provided by any one of embodiments of the present application.

The storage medium may be an internal storage unit of the communication device described in the foregoing embodiments, for example, a hard disk or a memory of the communication device. The storage medium may also be an external storage device of the communication device, for example, a plug-in hard disk, a smart media card (SMC), a secure digital (SD) card, a flash card, etc., that are equipped on the communication device.

It is to be understood by those skilled in the art that all or some of the steps, systems, and functional modules/units in the systems and devices in the methods disclosed above can be implemented as software, firmware, hardware, and suitable combination thereof. In hardware embodiments, the division among functional modules/units mentioned in the above description does not necessarily corresponds to the division among physical components; for example, a physical component can have a plurality of functions, or a function or step can be performed by several physical components in cooperation. Some or all physical components can be implemented as a software executed by a processor such as a central processing unit, a digital signal processor, or a microprocessor, or as a hardware, or as an integrated circuit such as an application-specific integrated circuit. Such software can be distributed on computer-readable media, which can include computer storage media (or non-transitory media) and communication media (or transitory media). As is well known to those skilled in the art, the term "computer storage media" includes volatile and nonvolatile, removable and non-removable media implemented in any method or technology for storage of information (such as computer readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and is accessible by a computer. In addition, as is well known to those skilled in the art, communication media typically comprises computer readable instructions, data structures, program modules, or other data in a modulated data signal such as a carrier wave or other transport mechanism, and can include any information delivery media.

It should be understood that the term "and/or" used in the description of the present application and the appended claims refers to any combination and all possible combinations of one or more of the associated listed items, and includes these combinations. It should be noted that, as used herein, the terms "include", "comprise" or any other variations thereof are intended to cover a non-exclusive inclusion, such that a process, method, article, or system that comprises a series of elements not only comprises those elements, but also comprises other elements that are not explicitly listed, or further comprises elements that are inherent to the process, method, article, or system. Without further limitations, an element limited by "comprising a..." does not exclude the presence of other identical elements in the process, method, article, or system that comprises the element.

The numbers of embodiments in the present application are for description only and do not represent the advantages or disadvantages of the embodiments. The foregoing descriptions are merely specific embodiments of the present application, but are not intended to limit the scope of protection of the present application, person skilled in the art can easily think of various equivalent modifications or replacements within the technical scope disclosed in the present application, and these modifications or replacements should be included in the scope of protection of the present application. Therefore, the scope of protection of the present application shall be based on the scope of protection of the claims.

## Claims

1. A session establishment method, performed by an access and mobility management function, the access and mobility management function being in communication connection with a location management function and a gateway mobile location center; the method comprises:
sending, in response to an emergency session request from a target terminal, a terminal location request to the location management function;
acquiring terminal location information which is determined by the location management function according to the terminal location request;
sending the emergency session request and the terminal location information to the gateway mobile location center, such that the gateway mobile location center determines a target alarm receiving center according to the emergency session request and the terminal location information, and sends the terminal location information to the target alarm receiving center, wherein a distance between the target terminal and the target alarm receiving center is smaller than or equal to a preset distance threshold; and
establishing an emergency session between the target alarm receiving center and the target terminal.

2. The session establishment method according to claim 1, wherein sending the emergency session request and the terminal location information to the gateway mobile location center, such that the gateway mobile location center determines the target alarm receiving center according to the emergency session request and the terminal location information comprises:
sending the emergency session request and the terminal location information to the gateway mobile location center, such that the gateway mobile location center determines a target call number according to the emergency session request, and determines the target alarm receiving center according to the target call number and the terminal location information.

3. The session establishment method according to claim 2, wherein the gateway mobile location center determines the target alarm receiving center according to the target call number and the terminal location information comprises:
the gateway mobile location center determines a plurality of candidate alarm receiving centers according to the terminal location information and location information of a plurality of alarm receiving centers stored in the gateway mobile location center;
the gateway mobile location center determines the target alarm receiving center from the plurality of candidate alarm receiving centers based on the target call number and number information corresponding to each of the candidate alarm receiving centers; and
the gateway mobile location center acquires network address information of the target alarm receiving center, and sends the terminal location information to the target alarm receiving center based on the network address information.

4. The session establishment method according to claim 1, wherein the method further comprises:
acquiring number information, location information and network address information corresponding to each of a plurality of alarm receiving centers; and
establishing mapping relationships between number information, location information and network address information of each of the alarm receiving centers, and storing the mapping relationships in the gateway mobile location center, such that the gateway mobile location center determines the target alarm receiving center according to the emergency session request, the terminal location information and the mapping relationships.

5. The session establishment method according to any one of claims 1-4, wherein the access and mobility management function is in connection with a network repository function; and sending the emergency session request and the terminal location information to the gateway mobile location center comprises:
sending to the network repository function query information for querying a network address of the gateway mobile location center;
acquiring a network address, which is determined by the network repository function according to the query information, of the gateway mobile location center; and
establishing communication connection with the gateway mobile location center based on the network address of the gateway mobile location center, and sending the emergency session request and the terminal location information to the gateway mobile location center.

6. The session establishment method according to any one of claims 1-4, wherein sending the terminal location request to the location management function comprises:
determining a network address of the location management function based on preset configuration information; and
establishing communication connection with the location management function based on the network address of the location management function, so as to send the terminal location request to the location management function.

7. The session establishment method according to any one of claims 1-4, wherein the terminal location information comprises a degree of location accuracy and a valid time range of the location information, and sending the emergency session request and the terminal location information to the gateway mobile location center comprises:
sending, upon the condition that the degree of location accuracy is greater than or equal to a preset threshold and a current time is within the valid time range, the emergency session request and the terminal location information to the gateway mobile location center.

8. A session establishment method, performed by a gateway mobile location center, the gateway mobile location center being in communication connection with an access and mobility management function, the method comprises:
acquiring an emergency session request and terminal location information from the access and mobility management function, wherein the access and mobility management function is configured to acquire the terminal location information from a location management function according to the emergency session request from the target terminal, and the location management function is in connection with the access and mobility management function;
determining a target alarm receiving center according to the emergency session request and the terminal location information, wherein a distance between the target terminal and the target alarm receiving center is smaller than or equal to a preset distance threshold; and
sending the terminal location information to the target alarm receiving center.

9. A communication device, wherein the communication device comprises a processor, a memory, a computer program stored on the memory and executable by the processor, and a data bus for enabling connection communication between the processor and the memory, wherein the computer program, when executed by the processor, implements steps of the session establishment method of any one of claims 1 to 7 or claim 8.

10. A storage medium for computer-readable storage, wherein the storage medium stores one or more programs thereon, and the one or more programs can be executed by one or more processors, so as to implement steps of the session establishment method of any one of claims 1 to 7 or claim 8.
